(19)

Europäisches Patentamt
European Patent Office
Office européen des brevets

(11) **EP 3 693 584 A1**

(12) **EUROPEAN PATENT APPLICATION**
published in accordance with Art. 153(4) EPC

(43) Date of publication:
**12.08.2020 Bulletin 2020/33**

(21) Application number: **18864542.8**

(22) Date of filing: **30.08.2018**

(51) Int Cl.:
*F02D 13/02* (2006.01)       *F01L 1/356* (2006.01)

(86) International application number:
**PCT/JP2018/032038**

(87) International publication number:
**WO 2019/069593 (11.04.2019 Gazette 2019/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.10.2017  JP 2017195803**

(71) Applicant: **Bosch Corporation
Tokyo 150-8360 (JP)**

(72) Inventor: **TAURA, Yasuhiro
Yokohama-shi
Kanagawa 224-8501 (JP)**

(74) Representative: **Bee, Joachim
Robert Bosch GmbH
Zentralabteilung Patente
Postfach 30 02 20
70442 Stuttgart (DE)**

(54) **VALVE TIMING CONTROL DEVICE AND VALVE TIMING CONTROL METHOD**

(57)    The present invention provides a valve timing control device and a valve timing control method capable of preventing valve timing control from becoming unstable when a locked state of a valve timing adjustment mechanism is canceled.

The valve timing control device includes: a feedback control section that sets a first operation amount instruction value by a feedback calculation; and a pin disengagement control section that executes pin disengagement control for setting a second operation amount instruction value of a hydraulic control valve such that a hydraulic pressure supplied to a valve timing adjuster fluctuates, and causing a lock pin to gradually move. During the pin disengagement control, the feedback control section continues the feedback calculation so as to suppress an increase rate of an operation amount of the hydraulic control valve in comparison with that in the basic feedback calculation.

[FIG. 6]

**Description**

Technical Field

The present invention relates to a valve timing control device and a valve timing control method.

Background Art

As an internal combustion engine mounted to a vehicle, an internal combustion engine that includes a valve timing adjuster is known. The valve timing adjuster adjusts valve timing that is opening/closing timing of an intake valve or an exhaust valve. By adjusting the valve timing, it is possible to improve fuel consumption, output, and emission properties of the internal combustion engine.

The valve timing adjuster includes a valve timing adjustment mechanism that has a first rotating body and a second rotating body. The first rotating body is coupled to a crankshaft of the internal combustion engine, and rotates along with rotation of the crankshaft. The second rotating body is fixed to a camshaft that opens/closes the intake valve or the exhaust valve, and is rotatably accommodated in the first rotating body. When the first rotating body and the second rotating body rotate relative to each other, a rotational phase of the camshaft relative to a rotational phase of the crankshaft is changed, and the valve timing is thereby changed.

When it is desired to advance the relative rotational phase of the camshaft, in the valve timing adjuster, a hydraulic pressure is supplied to an advancing hydraulic pressure chamber, and the hydraulic pressure is released from a retarding hydraulic pressure chamber. When it is desired to retard the relative rotational phase of the camshaft, the hydraulic pressure is supplied to the retarding hydraulic pressure chamber, and the hydraulic pressure is released from the advancing hydraulic pressure chamber. The hydraulic pressures in the advancing hydraulic pressure chamber and the retarding hydraulic pressure chamber are adjusted by controlling an operation amount of a hydraulic control valve that is provided in a hydraulic circuit for supplying the hydraulic pressure to the valve timing adjuster. The operation amount of the hydraulic control valve is controlled on the basis of a difference between a target rotational phase of the camshaft and the actual relative rotational phase of the camshaft.

The valve timing adjuster includes a lock mechanism that fixes the relative rotational phase between the first rotating body and the second rotating body. In a locked state of the lock mechanism, for example, the relative rotational phase between the first rotating body and the second rotating body can be retained even when the hydraulic pressure is low. The lock mechanism has a lock pin that is reciprocally held to the second rotating body, for example. In this case, a tip of the lock pin can advance or retreat to or from an engaging section that is provided to the first rotating body. When the lock pin is engaged with the engaging section, the relative rotational phase between the first rotating body and the second rotating body is fixed. Then, when the lock pin is disengaged from the engaging section, the first rotating body and the second rotating body can rotate relative to each other. When the hydraulic pressure that is supplied to the valve timing adjuster becomes equal to or higher than a specified pressure, the lock pin retreats from the engaging section, and the locked state is thereby canceled.

In order to change the relative rotational phase between the first rotating body and the second rotating body in the locked states of the first rotating body and the second rotating body, it is first necessary to perform operation to disengage the lock pin. At this time, in the case where the hydraulic pressure is rapidly increased, the first rotating body and the second rotating body start rotating relative to each other before the disengagement of the lock pin. As a result, a contact pressure between the lock pin and the engaging section is increased, which possibly disallows the lock pin from being disengaged. Also, when a foreign substance is present in a region where the lock pin is held, for example, slidability of the lock pin is deteriorated, which possibly disallows the lock pin from being disengaged. To handle such problems, a control device that executes lock pin vibration control is disclosed in PTL 1. In the lock pin vibration control, the control device fluctuates the hydraulic pressure in at least one of the hydraulic chambers (the advancing hydraulic pressure chamber and the retarding hydraulic pressure chamber) so as to vibrate the lock pin prior to phase change control.

Citation List

Patent Literature

PTL 1: JP-A-2009-133263

Summary of Invention

Technical Problem

Of the control devices for controlling the valve timing adjuster, such a control device is available that is configured to perform a feedback calculation on the basis of the difference between the target rotational phase of the camshaft and the actual relative rotational phase of the camshaft so as to calculate a first operation amount instruction value of the hydraulic control valve, to calculate a second operation amount instruction value of the hydraulic control valve so as to execute control for fluctuating the hydraulic pressure to vibrate the lock pin (pin disengagement control), and to switch the operation amount instruction value from the second operation amount instruction value to the first operation amount instruction value when the locked state is canceled. In the case where a PI (proportional and integral) calculation or a PID (proportional, integral, and differential) calculation is performed as the feedback calculation and the feedback calculation continues during the pin disengagement control, an integral term keeps being increased. Thus, the first operation amount instruction value keeps being increased.

As a result, when the locked state is canceled, and the operation amount instruction value is switched from the second operation amount instruction value to the first operation amount instruction value, the operation amount of the hydraulic control valve is possibly and abruptly increased, and the control possibly becomes unstable. When the control by the valve timing adjuster becomes unstable, it is considered that hunting of the camshaft possibly occurs, an intake air amount possibly varies, an engine speed possibly becomes unstable, and the engine is possibly and eventually stopped.

The present invention has been made in view of the above problem, and therefore an object of the present invention is to provide a valve timing control device and a valve timing control method capable of preventing valve timing control from becoming unstable when a locked state of a valve timing adjustment mechanism is canceled.

Solution to Problem

According to an aspect of the present invention, a valve timing control device that controls a valve timing adjuster so as to adjust opening/closing timing of a valve is provided. The valve timing adjuster includes: a valve timing adjustment mechanism that changes a rotational phase of a camshaft relative to a rotational phase of a crankshaft in an internal combustion engine; and a lock mechanism that keeps the crankshaft and the camshaft in a specified relative rotational phase when a lock pin is engaged with an engaging section. The valve timing control device includes: a target phase setting section that sets a target rotational phase of the camshaft with respect to the rotational phase of the crankshaft; a feedback control section that sets a first operation amount instruction value by a feedback calculation including proportional operation for changing an operation mount of a hydraulic control valve that supplies a hydraulic pressure to the valve timing adjuster in proportion to a difference between the actual relative rotational phase and the target rotational phase of the camshaft and integral operation for changing the operation amount of the hydraulic control valve in proportion to a time integral of the difference; a pin disengagement control section that executes pin disengagement control for setting a second operation amount instruction value of the hydraulic control valve such that the hydraulic pressure supplied to the valve timing adjustment mechanism fluctuates, and causes the lock pin to gradually move in a period until a locked state of the valve timing adjustment mechanism is canceled; and an operation amount setting section that sets the operation amount of the hydraulic control valve to the second operation amount instruction value in the period until the locked state of the valve timing adjustment mechanism is canceled, and sets the operation amount of the hydraulic control valve to the first operation amount instruction value in a period other than the above period. During the pin disengagement control, the feedback control section continues the feedback calculation such that an increase rate of the operation amount of the hydraulic control valve is suppressed in comparison with the basic feedback calculation.

According to another aspect of the present invention, a valve timing control method for controlling a valve timing adjuster so as to adjust opening/closing timing of a valve is provided. The valve timing adjuster includes: a valve timing adjustment mechanism that changes a rotational phase of a camshaft relative to a rotational shaft of a crankshaft in an internal combustion engine; and a lock mechanism that keeps the crankshaft and the camshaft in a specified relative rotational phase when a lock pin is engaged with an engaging section. The valve timing control method includes: a step of setting a target rotational phase of the camshaft with respect to the rotational phase of the crankshaft by a target phase setting section; a step of setting a first operation amount instruction value by a feedback control section performing a feedback calculation including proportional operation for changing an operation mount of a hydraulic control valve that supplies a hydraulic pressure to the valve timing adjuster in proportion to a difference between the actual relative rotational phase and the target rotational phase of the camshaft and integral operation for changing the operation amount of the hydraulic control valve in proportion to a time integral of the difference; a step of executing pin disengagement control by a pin disengagement control section, the pin disengagement control setting a second operation amount instruction value of the hydraulic control valve such that the hydraulic pressure supplied to the valve timing adjuster fluctuates, and causing the lock pin to gradually move in a period until a locked state of the valve timing adjustment mechanism is canceled; and a step of setting the operation amount of the hydraulic control valve to the second operation amount instruction value in the period until the locked state of the valve timing adjustment mechanism is canceled, and setting the operation amount of the hydraulic control valve to the first operation amount instruction value in a period other than the above period by an operation amount setting section. During the pin disengagement control, the feedback control section continues the feedback calculation such that an increase rate of the operation amount of the hydraulic control valve is suppressed.

Advantageous Effects of Invention

As it has been described so far, according to the present invention, it is possible to suppress the valve timing control from becoming unstable when the locked state of the valve timing adjustment mechanism is canceled.

Brief Description of Drawings

Fig. 1 is a schematic view of a configuration example of a valve timing adjuster to which a valve timing control device according to an embodiment of the present invention can be applied.
Fig. 2 is a view for illustrating a configuration example of a valve timing adjustment mechanism.
Fig. 3 is a view for illustrating a locked state of a lock mechanism.
Fig. 4 is a view for illustrating a state where the locked state of the lock mechanism is canceled.
Fig. 5 is a block diagram of a configuration example of the valve timing control device according to the embodiment.
Fig. 6 includes graphs for illustrating a change in a relative rotational phase of a camshaft in a reference example.
Fig. 7 is a flowchart of a valve timing control method according to the embodiment.
Fig. 8 includes graphs for illustrating the change in the relative rotational phase of the camshaft in the embodiment.
Fig. 9 includes graphs for illustrating the change in the relative rotational phase of the camshaft in a modified example of the embodiment.

Description of Embodiments

A detailed description will hereinafter be made on a preferred embodiment of the present invention with reference to the accompanying drawings. In the specification and the drawings, components that have substantially the same functional configurations will be denoted by the same reference signs, and a description thereon will not be repeated.

<1. Configuration Example of Valve Timing Adjuster>

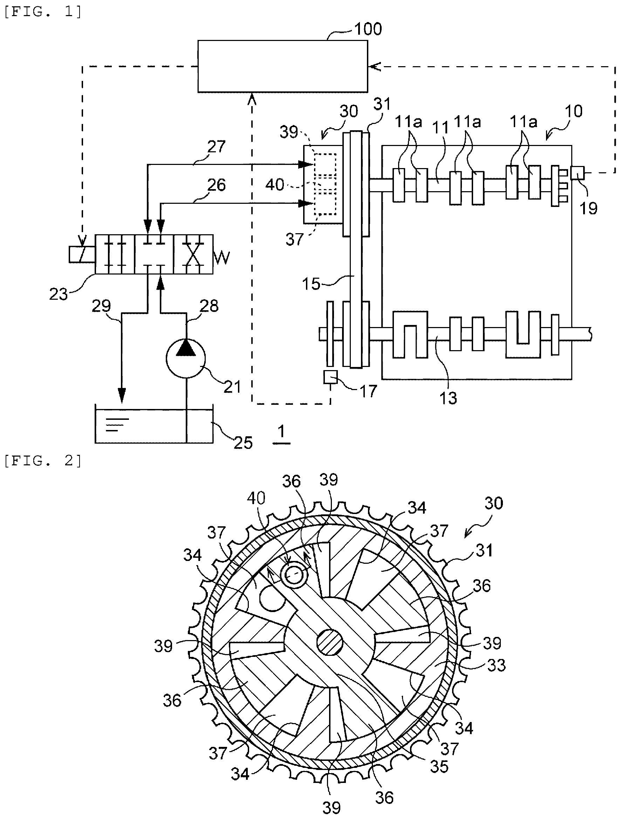

A description will be made on a configuration example of a valve timing adjuster 1 to which a valve timing control device 100 according to this embodiment can be applied with reference to Fig. 1. Fig. 1 is a schematic view of a configuration example of the valve timing adjuster 1.
The valve timing adjuster 1 is provided to an internal combustion engine 10 that is mounted to a vehicle or the like. The valve timing adjuster 1 includes an oil pump 21, a hydraulic control valve 23, a valve timing adjustment mechanism 30, and a lock mechanism 40. The oil pump 21 pressure-feeds hydraulic oil in an oil pan 25. The oil pump 21 may be a gear pump that is coupled to a crankshaft 13 of the internal combustion engine 10 and is driven by drive power of the internal combustion engine 10, for example. The hydraulic control valve 23 switches between supply of the hydraulic oil, which is pressure-fed by the oil pump 21, to the valve timing adjustment mechanism 30 and discharge of the hydraulic oil from the valve timing adjustment mechanism 30 to the oil pan 25.
A camshaft 11 is coupled to the crankshaft 13 of the internal combustion engine 10 via a timing chain 15. The timing chain 15 may be a timing belt. A plurality of cams 11a is fixed to the camshaft 11. An intake valve and an exhaust valve, which are not illustrated, are opened/closed when the camshaft 11 rotates. Fig. 1 only illustrates the single camshaft 11. However, the camshaft 11 is provided for each of the intake valve and the exhaust valve. The internal combustion engine 10 includes: a crank angle sensor 17 that detects a crank angle and a rotational frequency of the crankshaft 13; and a cam angle sensor 19 that detects a rotation angle of the camshaft 11.
The valve timing adjustment mechanism 30 is provided at an end of the camshaft 11. The timing chain 15 is wound around a sprocket 31 in the valve timing adjustment mechanism 30. Accordingly, in conjunction with rotation of the crankshaft 13, the drive power is transmitted to the valve timing adjustment mechanism 30 via the timing chain 15, and the camshaft 11 rotates with the valve timing adjustment mechanism 30.
Fig. 2 is a cross-sectional view of a configuration example of the valve timing adjustment mechanism 30. The valve timing adjustment mechanism 30 includes a housing 33 and a rotor 35. In this embodiment, the housing 33 functions as the first rotating body, and the rotor 35 functions as the second rotating body. The housing 33 is integrally formed with the sprocket 31, and rotates with the sprocket 31. The rotor 35 is accommodated in the housing 33 in a manner to be rotatable about a common rotation axis. Four vanes 36 are provided to an outer circumference of the rotor 35. In the housing 33, four accommodation chambers 34, each of which accommodates the respective vane 36, are provided. Each of the vanes 36 partitions the respective accommodation chamber 34 into an advancing hydraulic pressure chamber 37 and a retarding hydraulic pressure chamber 39.

When a hydraulic pressure in the advancing hydraulic pressure chamber 37 is increased to be higher than a hydraulic pressure in the retarding hydraulic pressure chamber 39, the vane 36 moves in the accommodation chamber 34, and the rotor 35 rotates to an advancing side in the housing 33. When the hydraulic pressure in the retarding hydraulic pressure chamber 39 is increased to be higher than the hydraulic pressure in the advancing hydraulic pressure chamber 37, the vane 36 moves in the accommodation chamber 34, and the rotor 35 rotates to a retarding side in the housing 33.

As illustrated in Fig. 1, the hydraulic oil is supplied to the advancing hydraulic pressure chamber 37 via a first oil channel 26. The hydraulic oil is supplied to the retarding hydraulic pressure chamber 39 via a second oil channel 27. The oil pump 21 supplies the hydraulic oil to the advancing hydraulic pressure chamber 37 and the retarding hydraulic pressure chamber 39. The oil pump 21 is provided to a hydraulic oil supply channel 28. The hydraulic control valve 23 switches between communication and blockage of each of the first oil channel 26 and the second oil channel 27 with and from the hydraulic oil supply channel 28 or a hydraulic oil discharge channel 29. The hydraulic control valve 23 illustrated in Fig. 1 is switched among three states.

When the hydraulic control valve 23 is in a first state, the hydraulic oil supply channel 28 communicates with the first oil channel 26, and the hydraulic oil discharge channel 29 communicates with the second oil channel 27. When the oil pump 21 is driven in this state, the hydraulic pressure is supplied to the advancing hydraulic pressure chamber 37, and the hydraulic pressure is released from the retarding hydraulic pressure chamber 39. As a result, a rotational phase of the rotor 35 relative to the housing 33 is shifted to the advancing side, and the camshaft 11 rotates to the advancing side. When the hydraulic control valve 23 is in a second state (the illustrated state), both of the first oil channel 26 and the second oil channel 27 are blocked from the hydraulic oil supply channel 28 and the hydraulic oil discharge channel 29. In this state, the hydraulic pressures in the advancing hydraulic pressure chamber 37 and the retarding hydraulic pressure chamber 39 are maintained, and the rotational phase of the rotor 35 relative to the housing 33 is maintained. When the hydraulic control valve 23 is in a third state, the hydraulic oil supply channel 28 communicates with the second oil channel 27, and the hydraulic oil discharge channel 29 communicates with the first oil channel 26. When the oil pump 21 is driven in this state, the hydraulic pressure is supplied to the retarding hydraulic pressure chamber 39, and the hydraulic pressure is released from the advancing hydraulic pressure chamber 37. As a result, the rotational phase of the rotor 35 relative to the housing 33 is shifted to the retarding side, and the camshaft 11 rotates to the retarding side.

For example, an electromagnetic valve is used as the hydraulic control valve 23. The hydraulic control valve 23, which is the electromagnetic valve, is switched among the first state, the second state, and the third state according to a duty ratio of a drive signal (a drive duty ratio), for example. When the drive duty ratio of the hydraulic control valve 23 is 50%, the illustrated hydraulic control valve 23 is brought into the second state. In this state, both of the first oil channel 26 and the second oil channel 27 are blocked from the hydraulic oil supply channel 28 and the hydraulic oil discharge channel 29. Meanwhile, when the drive duty ratio of the hydraulic control valve 23 exceeds 50%, the hydraulic control valve 23 is brought into the first state. In this state, the hydraulic oil supply channel 28 communicates with the first oil channel 26, and the hydraulic oil discharge channel 29 communicates with the second oil channel 27. When the drive duty ratio of the hydraulic control valve 23 is lower than 50%, the hydraulic control valve 23 is brought into the third state. In this state, the hydraulic oil supply channel 28 communicates with the second oil channel 27, and the hydraulic oil discharge channel 29 communicates with the first oil channel 26.

In the first state, as the drive duty ratio is increased, an amount of the hydraulic oil that is supplied to the advancing hydraulic pressure chamber 37 is increased. In the third state, as the drive duty ratio is reduced, the amount of the hydraulic oil that is supplied to the retarding hydraulic pressure chamber 39 is increased. As the amount of the hydraulic oil that is supplied to the advancing hydraulic pressure chamber 37 or the retarding hydraulic pressure chamber 39 is increased, a pressure to cause the rotation of the rotor 35 relative to the housing 33 is increased, and a relative rotational frequency is increased.

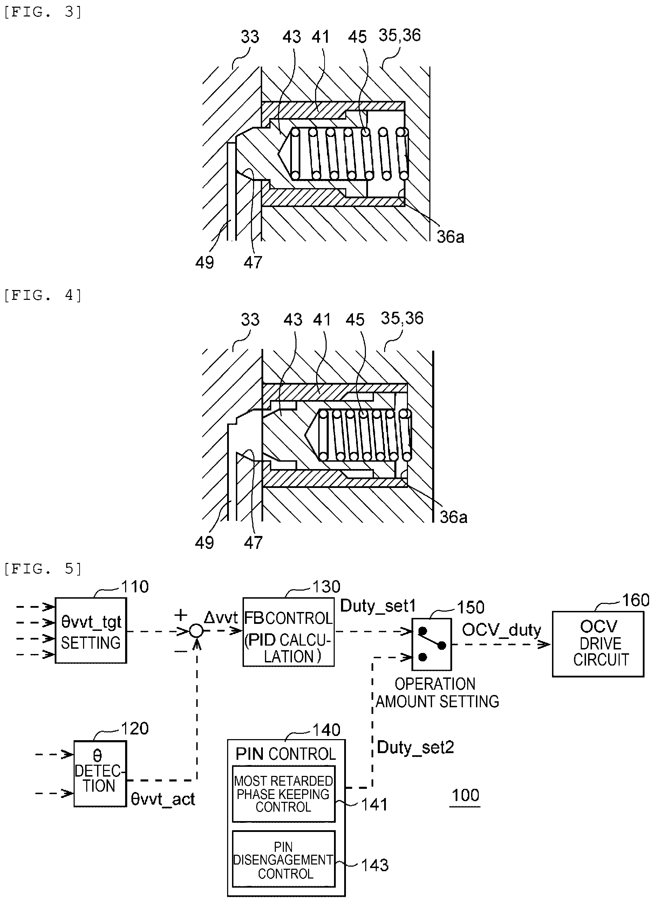

The lock mechanism 40 fixes valve timing by keeping the relative rotational phase between the housing 33 and the rotor 35 at a specified position. Fig. 3 is a schematic view of a configuration example of the lock mechanism 40. Fig. 3 is a cross-sectional view of the lock mechanism 40 that is seen in an arrow direction in Fig. 2. The lock mechanism 40 includes a sleeve 41, a lock pin 43, a coil spring 45, and an engaging section 47. The lock pin 43 is reciprocally held by the rotor 35 via the sleeve 41. The engaging section 47 is provided to the housing 33. When the lock pin 43 is engaged with the engaging section 47, the relative rotational phase between the housing 33 and the rotor 35 is kept. In this way, the crankshaft 13 and the camshaft 11 are kept in a specified relative rotational phase, and the valve timing is thereby fixed.

The sleeve 41 has a hollow cylindrical shape, and is accommodated in an accommodating section 36a provided in the vane 36 of the rotor 35. The lock pin 43 is accommodated in the sleeve 41 in a manner to be able to reciprocate in an axial direction. That is, the lock pin 43 is held in the manner to be able to reciprocate with respect to the rotor 35. The coil spring 45 is provided between the lock pin 43 and a bottom surface of the accommodating section 36a, and urges the lock pin 43 to the outside of the accommodating section 36a. A tip of the lock pin 43 that is urged by the coil spring 45 is projected from the sleeve 41. A position of an end surface of the sleeve 41 substantially corresponds to a position of an abutment surface between the rotor 35 and the housing 33, and the tip of the lock pin 43 can be projected to the housing 33 side from a surface of the rotor 35.

The housing 33 has the engaging section 47 that is formed as a recessed section in a part of the abutment surface against the rotor 35. The lock pin 43 can advance to or retreat from the engaging section 47, and the tip of the lock pin 43 can be engaged with the engaging section 47. The engaging section 47 has a similar shape to a shape of the tip of the lock pin 43. In a state where the tip of the lock pin 43 is completely engaged with the engaging section 47, the housing 33 and the rotor 35 cannot rotate relative to each other. The hydraulic oil can be supplied to the engaging section 47 via an oil channel 49 that is provided in the housing 33. When the hydraulic oil is supplied to the engaging section 47, and the hydraulic pressure that is applied to the lock pin 43 exceeds an urging force of the coil spring 45, the lock pin 43 retreats against the urging force of the coil spring 45. In a state where the tip of the lock pin 43 retreats from the abutment surface between the housing 33 and the rotor 35, the housing 33 and the rotor 35 can rotate relative to each other (see Fig. 4).

In this embodiment, the lock mechanism 40 keeps the relative rotational phase of the housing 33 and the rotor 35 in the most retarded phase in which the valve timing is retarded the most. Accordingly, operation to supply the hydraulic oil to the engaging section 47 in order to cancel the locked state of the lock mechanism 40 is performed when the rotor 35 is shifted to the advancing side. Thus, in this embodiment, the oil channel 49, through which the hydraulic oil is supplied to the engaging section 47, is connected to the first oil channel 26, through which the hydraulic oil is supplied to the advancing hydraulic pressure chamber 37. In the case where the housing 33 and the rotor 35 are kept in a state where the valve timing is in the most retarded phase and the hydraulic oil is supplied to the advancing hydraulic pressure chamber 37, the hydraulic oil is also supplied to the engaging section 47. The tip of the lock pin 43 and the engaging section 47 each has a tapered shape. Thus, the rotor 35 starts being shifted to the advancing side while the lock pin 43 is being disengaged from the engaging section 47. Thereafter, the lock pin 43 is completely disengaged from the engaging section 47. As a result, the rotor 35 can further be shifted to the relative rotational phase that corresponds to target valve timing.

<2. Valve Timing Control Device>

Next, a description will be made on a configuration example of the valve timing control device (hereinafter also simply referred to as the "control device") 100 according to this embodiment with reference to Fig. 5. Fig. 5 is a block diagram of the configuration example of the control device 100. The control device 100 includes a target phase setting section (described as "θvvt_tgt SETTING" in Fig. 5) 110, a relative phase detecting section (described as "θ DETECTION" in Fig. 5) 120, a feedback control section (described as "FB CONTROL" in Fig. 5) 130, a lock pin control section (described as "PIN CONTROL" in Fig. 5) 140, an operation amount setting section (described as "OPERATION AMOUNT SETTING" in Fig. 5) 150, and a hydraulic control valve drive circuit (described as "OCV drive circuit" in Fig. 5).

The control device 100 is configured to include a processor such as a central processing unit (CPU) or a micro-processing unit (MPU) . In this case, some or all of the target phase setting section 110, the relative phase detecting section 120, the feedback control section 130, the lock pin control section 140, and the operation amount setting section 150 are functions that are implemented when the processor runs a software program. Instead of being constructed of the CPU, the MPU, or the like, the control device 100 may partially or entirely be constructed of a member in which firmware or the like can be updated. Alternatively, the control device 100 may be a program module or the like that is executed by a command from the CPU or the like.

The control device 100 also includes an unillustrated storage section that includes a storage element such as random access memory (RAM) or read only memory (ROM). The storage section may include a storage device such as a CD-ROM or a storage unit.

(2-1. Target Phase Setting Section)

The target phase setting section 110 calculates a target rotational phase θvvt_tgt of the camshaft 11. For example, the target phase setting section 110 sets the target rotational phase θvvt_tgt of the camshaft 11 on the basis of information on a temperature of the hydraulic oil (an oil temperature), intake air filling efficiency to a cylinder of the internal combustion engine 10, an engine speed, ON/OFF of exhaust gas recirculation (EGR) control, and the like. The oil temperature is used as an actuation permission condition of the valve timing adjuster 1. For example, in a state where the oil temperature is low immediately after a start of the internal combustion engine 10 or the like, viscosity of the hydraulic oil is so high that the hydraulic pressure may not accurately be controlled. Thus, the actuation of the valve timing adjuster 1 is prohibited. As a result, the housing 33 and the rotor 35 are maintained in locked states.

When the actuation of the valve timing adjuster 1 is permitted, the target phase setting section 110 sets the target rotational phase θvvt_tgt of the camshaft 11 so as to obtain the optimum valve timing on the basis of the intake air filling efficiency and the engine speed. For example, the target phase setting section 110 may set the target rotational phase θvvt_tgt with reference to a map that is stored in the storage section in advance. The target rotational phase θvvt_tgt may be corrected according to ON/OFF of the EGR control or an EGR amount. The method for setting the target rotational phase θvvt_tgt is not limited to the above examples.

(2-2. Relative Phase Detecting Section)

The relative phase detecting section 120 detects an actual relative rotational phase θvvt_act of the camshaft 11. For example, the relative phase detecting section 120 detects the actual relative rotational phase θvvt_act of the camshaft 11 on the basis of a sensor signal of the crank angle sensor 17 that detects the crank angle of the crankshaft 13 and a sensor signal of the cam angle sensor 19 that detects the rotation angle of the camshaft 11. More specifically, the relative phase detecting section 120 detects the actual relative rotational phase θvvt_act of the camshaft 11 on the basis of a difference between the crank angle, which is obtained on the basis of the sensor signal of the crank angle sensor 17, and the cam angle, which is obtained on the basis of the sensor signal of the cam angle sensor 19.

(2-3. Feedback Control Section)

The feedback control section 130 sets a first operation amount instruction value Duty_set1 of the hydraulic control valve 23 on the basis of a difference Δvvt (θvvt_act - θvvt_tgt) between the actual relative rotational phase θvvt_act of the camshaft 11 that is detected by the relative phase detecting section 120 and the target rotational phase θvvt_tgt of the camshaft 11 that is set by the target phase setting section 110. The feedback control section 130 performs a feedback calculation that includes: proportional operation for changing an operation amount of the hydraulic control valve 23 in proportion to the difference Δvvt; and integral operation for changing the operation amount of the hydraulic control valve 23 in proportion to a time integral of the difference Δvvt, so as to set the first operation amount instruction value Duty_set1.

In this embodiment, in addition to the proportional operation and the integral operation as the feedback calculation, the feedback control section 130 also performs a PID (proportional, integral, and differential) calculation that includes differential operation for changing the operation amount of the hydraulic control valve 23 in proportion to a magnitude of a change in the difference Δvvt, so as to set the first operation amount instruction value Duty_set1. The feedback calculation may be a PI calculation. In this embodiment, the feedback control section 130 sets the drive duty ratio of the hydraulic control valve 23 as the first operation amount instruction value Duty_set1. When the relative rotational phase θvvt_act of the camshaft 11 is advanced, the first operation amount instruction value Duty_set1 is set to the drive duty ratio that exceeds 50%. When the relative rotational phase θvvt_act of the camshaft 11 is retarded, the first operation amount instruction value Duty_set1 is set to the drive duty ratio that is lower than 50%.

The first operation amount instruction value Duty_set1, which is obtained by the PID calculation, at time t can be expressed by the following formula (1). The feedback control section 130 performs a basic feedback calculation by the following formula (1) using the difference Δvvt of the relative rotational phase of the camshaft 11 so as to set the first operation amount instruction value Duty_set1.

[Formula 1]

$$Duty\_set1(t) = Kp \times \Delta vvt(t) + Ki \times \int_0^t \Delta vvt(t) \cdot dt + Kd \times \frac{d\Delta vvt(t)}{dt} \quad \cdots \quad (1)$$

Kp:     Feedback gain (proportional element)
Ki:     Feedback gain (integral element)
Kd:     Feedback gain (differential element)
∫dt:    Integral term
d/dt:   Derivative term

In addition, while a pin disengagement control section 143 of the lock pin control section 140 executes pin disengagement control, the feedback control section 130 continues the feedback calculation and sets the first operation amount instruction value Duty_set1 such that an increase rate of the operation amount of the hydraulic control valve 23 is suppressed in comparison with that in the basic feedback calculation expressed by the above formula (1). For example, while the pin disengagement control is executed, the feedback control section 130 fixes at least the integral term in the above formula (1) to zero, and continues the feedback calculation.

(2-4. Lock Pin Control Section)

The lock pin control section 140 sets a second operation amount instruction value Duty_set2 of the hydraulic control valve 23 with a primary purpose of controlling the lock mechanism 40. In this embodiment, the lock pin control section 140 sets the drive duty ratio of the hydraulic control valve 23 as the second operation amount instruction value Duty_set2. The lock pin control section 140 has functions as a most retarded phase keeping control section 141 and the pin disengagement control section 143.

The most retarded phase keeping control section 141 executes control for keeping the valve timing in the most retarded phase. More specifically, the most retarded phase keeping control section 141 sets the second operation amount instruction value Duty_set2 of the hydraulic control valve 23 such that the rotor 35 is not shifted to the advancing side in the engaged state of the lock pin 43 with the engaging section 47. In this embodiment, the relative rotational phase of the housing 33 and the rotor 35 is kept in the second state where the drive duty ratio of the hydraulic control valve 23 is set at 50%. Thus, the most retarded phase keeping control section 141 sets the second operation amount instruction value Duty_set2 to the drive duty ratio of 45% that is slightly retarded from the drive duty ratio in the second state, for example. In this way, the valve timing is kept in the most retarded phase without the disengagement of the lock pin 43 from the engaging section 47.

The pin disengagement control section 143 sets the second operation amount instruction value Duty_set2 of the hydraulic control valve 23 with a primary purpose of preventing fixation of the lock pin 43 at the time when the lock pin 43 of the lock mechanism 40 in the locked state is disengaged. More specifically, in a period from time at which the lock pin 43 starts moving in the locked state of the valve timing adjustment mechanism 30 to time at which the locked state is canceled, the pin disengagement control section 143 executes the pin disengagement control for setting the drive duty ratio of the hydraulic control valve 23 such that the hydraulic pressure supplied to the valve timing adjuster 1 fluctuates and for causing the lock pin 43 to gradually move. For example, when the hydraulic oil is supplied to the advancing hydraulic pressure chamber 37 in the engaged state of the lock pin 43 with the engaging section 47, the pin disengagement control section 143 causes the drive duty ratio of the hydraulic control valve 23 to fluctuate, so as to cause the fluctuation of the hydraulic pressure in the engaging section 47. With the fluctuation of the hydraulic pressure, vibrations are generated to the lock pin 43, and thus the fixation of the lock pin 43 can be prevented.

More specifically, in the case where the excessive amount of the hydraulic oil is supplied to the advancing hydraulic pressure chamber 37 when the rotor 35 is shifted to the advancing side from the locked state, due to an increase in the hydraulic pressure of the engaging section 47, the rotor 35 possibly starts being shifted before the disengagement of the lock pin 43 from the engaging section 47. As a result, a contact pressure between the lock pin 43 and the engaging section 47 is increased, which possibly prevents the disengagement of the lock pin 43 from the engaging section 47. The lock pin 43 is held in the sleeve 41 in a freely reciprocal manner. However, when a foreign substance is present on a sliding surface or a region where the coil spring 45 is accommodated, or the like, the lock pin 43 may not easily be disengaged from the engaging section 47 regardless of a supply amount of the hydraulic oil to the advancing hydraulic pressure chamber 37 or the engaging section 47.

To handle such a problem, the vibrations are generated to the lock pin 43 when the lock pin 43 is disengaged from the engaging section 47. In this way, the contact pressure between the lock pin 43 and the engaging section 47 fluctuates, and thus the fixation of the lock pin 43 is prevented. Alternatively, due to the generation of the vibrations to the lock pin 43, even when the foreign substance is present, or the like, the lock pin 43 easily moves, and thus, the fixation of the lock pin 43 is prevented. At this time, the pin disengagement control section 143 may alternately set the second operation amount instruction value Duty_set2 to the drive duty ratio that exceeds 50% and the drive duty ratio that is lower than 50%. In this way, a rotational direction of the rotor 35 relative to the housing 33 is alternately switched. As a result, the fixation of the lock pin 43 is easily eliminated.

(2-5. Operation Amount Setting Section)

The operation amount setting section 150 sets an operation amount OCV_duty of the hydraulic control valve 23 to the first operation amount instruction value Duty_set1 or the second operation amount instruction value Duty_set2, and outputs a drive instruction signal to the hydraulic control valve drive circuit 160. More specifically, in the period from time at which the lock pin 43 starts moving in the locked state of the valve timing adjustment mechanism 30 to the time at which the locked state is canceled, the operation amount setting section 150 sets the operation amount OCV_duty to the second operation amount instruction value Duty_set2. In a period other than the period in which the locked state is canceled, the operation amount setting section 150 sets the operation amount OCV_duty to the first operation amount instruction value Duty_set1.

(2-6. Hydraulic Control Valve Drive Circuit)

The hydraulic control valve drive circuit 160 drives the hydraulic control valve 23 in response to the drive instruction signal that is output from the operation amount setting section 150. More specifically, the hydraulic control valve drive circuit 160 switches ON/OFF of energization to an electromagnetic solenoid in the hydraulic control valve 23 according to the drive duty ratio that is set by the operation amount setting section 150. When the operation amount OCV_duty is set to the first operation amount instruction value Duty_set1, the rotor 35 and the housing 33 rotate relative to each other such that the hydraulic pressures supplied to the advancing hydraulic pressure chamber 37 and the retarding hydraulic pressure chamber 39 in the valve timing adjustment mechanism 30 are controlled and thus the actual relative rotational phase θvvt_act of the camshaft 11 becomes the target rotational phase θvvt_tgt. When the operation amount OCV_duty is set to the second operation amount instruction value Duty_set2, the pin disengagement control is executed until the lock pin 43 is disengaged from the engaging section 47.

<3. Operation Example of Valve Timing Control Device>

Next, a description will be made on an operation example of the valve timing control device 100 according to this embodiment. A description will hereinafter be made on a problem of a valve timing control device in a reference example, and then a description will be made on the operation example of the valve timing control device 100 according to this embodiment.

(3-1. Problem of Valve Timing Control Device in Reference Example)

It is assumed that the feedback control section 130 continues performing the basic feedback calculation, which is expressed by the above formula (1), while the pin disengagement control is executed by the control device 100 that is configured as described above. During the pin disengagement control, the actual relative rotational phase θvvt_act of the camshaft 11 is hardly changed, and the difference Δvvt is hardly changed. Thus, the integral term of the formula (1) keeps being increased. As a result, the drive duty ratio of the hydraulic control valve 23 is abruptly increased when the lock pin 43 is disengaged from the engaging section 47, the pin disengagement control is thereby terminated, and the operation amount OCV_duty of the hydraulic control valve 23 is returned to the first operation amount instruction value Duty_set1. Therefore, the valve timing possibly becomes unstable due to hunting of the rotor 35 and the camshaft 11.

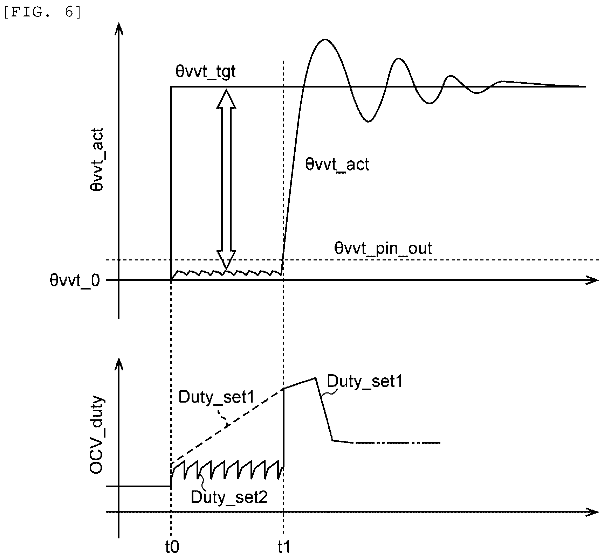

Fig. 6 includes graphs for illustrating a change in the relative rotational phase θvvt_act of the camshaft 11 according to the reference example, and illustrates the change in the actual relative rotational phase θvvt_act of the camshaft 11 at the time when the valve timing is advanced from a relative rotational phase θvvt_0 in which the valve timing is retarded the most. In the illustrated example, the pin disengagement control is initiated at time t0 according to the second operation amount instruction value Duty_set2. Then, at time t1 at which the actual relative rotational phase θvvt_act of the camshaft 11 reaches a pin disengagement completion determination threshold value θvvt_pin_out, the operation amount OCV_duty of the hydraulic control valve 23 is switched from the second operation amount instruction value Duty_set2 to the first operation amount instruction value Duty_set1.

During the pin disengagement control (in a period from the time t0 to t1), the operation amount OCV_duty of the hydraulic control valve 23 is set to the second operation amount instruction value Duty_set2, and the operation amount OCV_duty repeatedly fluctuates up and down. For this reason, the relative rotational phase θvvt_act of the camshaft 11 repeatedly and slightly vibrates. In the case where the feedback control section 130 continues performing the basic feedback calculation by the above formula (1) in such a period, the actual relative rotational phase θvvt_act of the camshaft 11 remains away from the target rotational phase θvvt_tgt. Thus, the first operation amount instruction value Duty_set1 is gradually increased (see a broken line) . As a result, when the pin disengagement control is completed, and the operation amount OCV_duty is switched from the second operation amount instruction value Duty_set2 to the first operation amount instruction value Duty_set1, the operation amount OCV_duty of the hydraulic control valve 23 is abruptly increased. Thus, the relative rotational phase θvvt_act of the camshaft 11 is abruptly shifted, and the hunting of the camshaft 11 occurs.

(3-2. Operation Example at Time of Unlocking)

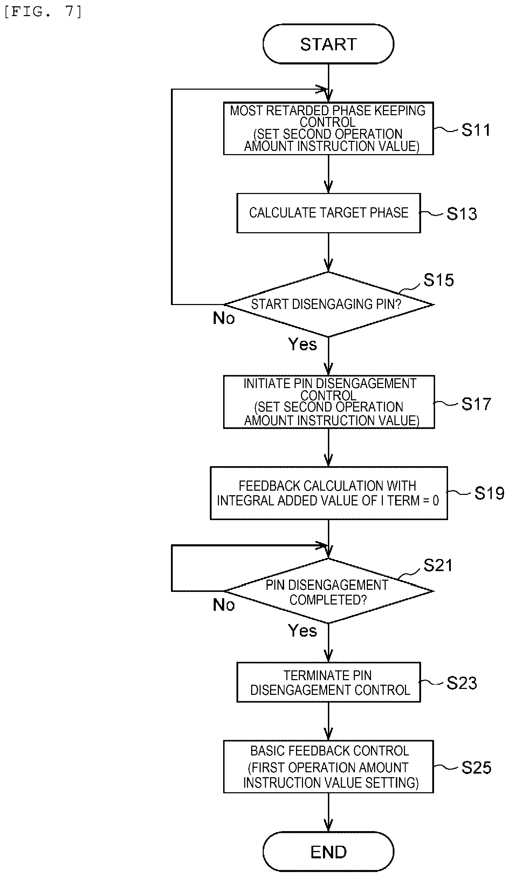

Fig. 7 is a flowchart illustrating an operation example at the time when the locked state is canceled by the control device 100 according to this embodiment. The flowchart illustrates an example of processing that is executed when the valve timing adjustment mechanism 30 is in the locked state, that is, when the valve timing is kept in the most retarded phase.

First, the most retarded phase keeping control section 141 of the lock pin control section 140 executes control for keeping the valve timing in the most retarded phase (step S11). In this case, the operation amount setting section 150 sets the operation amount OCV_duty of the hydraulic control valve 23 to the second operation amount instruction value Duty_set2 that is set by the most retarded phase keeping control section 141, and outputs the drive instruction signal to the hydraulic control valve drive circuit 160. In this embodiment, the most retarded phase keeping control section 141 sets the second operation amount instruction value Duty_set2 of the hydraulic control valve 23 to the drive duty ratio of 45%. In this way, the second operation amount instruction value Duty_set2 is kept at the drive duty ratio of 45% that is slightly retarded from the drive duty ratio of 50%, at which the relative rotational phase of the housing 33 and the rotor 35 is kept, and the disengagement of the lock pin 43 from the engaging section 47 is prevented.

Next, the target phase setting section 110 calculates the target rotational phase θvvt_tgt of the camshaft 11 (step S13). For example, in the state where the oil temperature is low immediately after the start of the internal combustion engine 10 or the like, the viscosity of the hydraulic oil is so high that the hydraulic pressure may not accurately be controlled. Thus, the target phase setting section 110 prohibits the actuation of the valve timing adjuster 1. In this case, the target phase setting section 110 sets the target rotational phase θvvt_tgt of the camshaft 11 to the relative rotational phase in which the valve timing is retarded the most.

Meanwhile, when the actuation of the valve timing adjuster 1 is permitted, the target phase setting section 110 refers to the map that is stored in the storage section in advance, and sets the target rotational phase θvvt_tgt of the camshaft 11 so as to obtain the optimum valve timing on the basis of the intake air filling efficiency and the engine speed. The method for setting the target rotational phase θvvt_tgt is not limited to the above examples.

Next, the pin disengagement control section 143 of the lock pin control section 140 determines whether to disengage the lock pin 43 (step S15). For example, the lock pin control section 140 determines whether the target rotational phase θvvt_tgt of the camshaft 11 is advanced from the relative rotational phase θvvt_0 that corresponds to the most retarded phase of the valve timing. If the pin disengagement control section 143 does not determine to disengage the lock pin 43 (S15/No), the processing returns to step S11, and the most retarded phase keeping control section 141 continues executing the most retarded phase keeping control.

On the other hand, if the pin disengagement control section 143 determines to disengage the lock pin 43 (S15/Yes), the pin disengagement control section 143 initiates the pin disengagement control (step S17). In this case, the operation amount setting section 150 sets the operation amount OCV_duty of the hydraulic control valve 23 to the second operation amount instruction value Duty_set2 that is set by the pin disengagement control section 143, and outputs the drive instruction signal to the hydraulic control valve drive circuit 160. In the period from the time at which the lock pin 43 starts moving to the time at which the locked state is canceled, the pin disengagement control section 143 sets the second operation amount instruction value Duty_set2 of the hydraulic control valve 23 such that the hydraulic pressure supplied to the valve timing adjuster 1 fluctuates, and causes the lock pin 43 to gradually move.

In step S17, when the pin disengagement control section 143 initiates the pin disengagement control, the feedback control section 130 fixes the integral term (an I term) in the PID formula expressed by the above formula (1) to zero, and continues performing the feedback calculation (step S19). During the pin disengagement control, the state where the actual relative rotational phase θvvt_act of the camshaft 11 remains away from the target rotational phase θvvt_tgt continues. However, by fixing the integral term to zero, it is possible to suppress the increase in the first operation amount instruction value Duty_set1 that is set by the feedback control section 130. At this time, in addition to the integral term, the proportional term (a P term) and the derivative term (a D term) may also be set to zero.

Next, the pin disengagement control section 143 determines whether the disengagement of the lock pin 43 from the engaging section 47 is completed (step S21). For example, the pin disengagement control section 143 determines whether the actual relative rotational phase θvvt_act of the camshaft 11 has reached the pin disengagement completion determination threshold value θvvt_pin_out, and thereby determines the completion of the disengagement of the lock pin 43. The pin disengagement completion determination threshold value θvvt_pin_out is set on the basis of a minimum rotational phase to which the camshaft 11 is possibly shifted upon the disengagement of the lock pin 43, for example. If the pin disengagement control section 143 does not determine that the disengagement of the lock pin 43 from the engaging section 47 is completed (S21/No), the pin disengagement control section 143 continues executing the pin disengagement control, and the feedback control section 130 continues performing the feedback calculation while keeping the fixation of the integral term to zero.

On the other hand, if the pin disengagement control section 143 determines that the disengagement of the lock pin 43 from the engaging section 47 is completed (S21/Yes), the pin disengagement control section 143 terminates the pin disengagement control (step S23). Next, the feedback control section 130 initiates basic feedback control by the calculation formula expressed by the above formula (1) (step S25). In this case, the operation amount setting section 150 sets the operation amount OCV_duty of the hydraulic control valve 23 to the first operation amount instruction value Duty_set1 that is set by the feedback control section 130, and outputs the drive instruction signal to the hydraulic control valve drive circuit 160.

When the basic feedback control is initiated, the integral term of the PID calculation starts from zero. Thus, it is possible to prevent the abrupt increase in the operation amount OCV_duty of the hydraulic control valve 23. In the case where the proportional term and the derivative term are also fixed to zero in addition to the integral term during the pin disengagement control, the first operation amount instruction value Duty_set1 by the PID calculation remains zero until right before the initiation of the basic feedback control. Thus, it is possible to minimize an increase width of the operation amount OCV_duty at the initiation of the basic feedback control.

(3-3. Timing Chart)

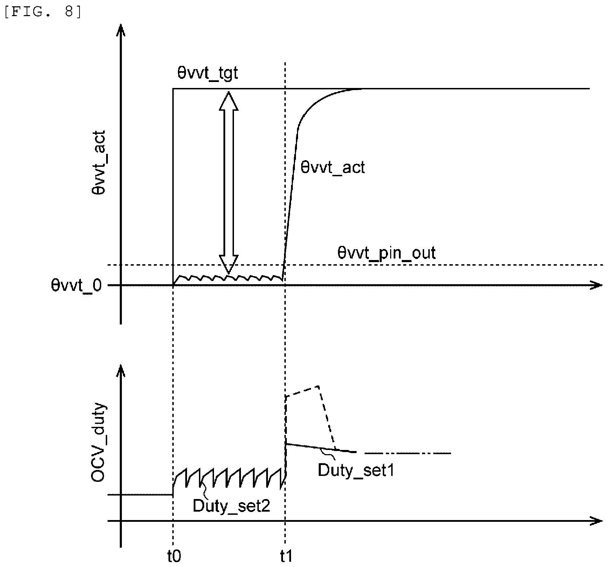

Fig. 8 includes graphs for illustrating the change in the relative rotational phase θvvt_act of the camshaft 11 according to this embodiment, and, similar to Fig. 6, illustrates the change in the actual relative rotational phase θvvt_act of the camshaft 11 at the time when the valve timing is advanced from the relative rotational phase θvvt_0 in which the valve timing is retarded the most.

Also, in the control device 100 according to this embodiment, during the pin disengagement control (in the period from the time t0 to t1), the operation amount OCV_duty of the hydraulic control valve 23 is set to the second operation amount instruction value Duty_set2, and the operation amount OCV_duty fluctuates up and down. In this way, the relative rotational phase θvvt_act of the camshaft 11 repeatedly and slightly vibrates. However, in this embodiment, while the pin disengagement control is executed, the feedback control section 130 fixes at least the integral term in the PID calculation by the above formula (1) to zero and continues the feedback calculation. Thus, even in the case where the target rotational phase θvvt_tgt of the camshaft 11 keeps separating from the actual relative rotational phase θvvt_act, the first operation amount instruction value Duty_set1 does not keep being increased.

As a result, it is possible to suppress the increase width of the operation amount OCV_duty of the hydraulic control valve 23 at the time when the pin disengagement control is completed and the operation amount OCV_duty is switched from the second operation amount instruction value Duty_set2 to the first operation amount instruction value Duty_set1. The increase width of the operation amount OCV_duty in this embodiment at the time t1 that is indicated by a solid line in Fig. 8 is smaller than the increase width of the operation amount OCV_duty in the reference example at the time t1 that is indicated by a broken line. Thus, the relative rotational phase θvvt_act of the camshaft 11 is converged to the target rotational phase θvvt_tgt without generating the hunting of the camshaft 11.

The valve timing control device 100 according to this embodiment that has been described so far includes: the feedback control section 130 that performs the feedback calculation on the basis of the difference Δvvt between the target rotational phase θvvt_tgt and the actual relative rotational phase θvvt_act of the camshaft 11; and the pin disengagement control section 143 that executes the pin disengagement control. The valve timing control device 100 also includes the operation amount setting section 150 that sets the operation amount OCV_duty of the hydraulic control valve 23 to either one of the first operation amount instruction value Duty_set1 that is set by the feedback control section 130 and the second operation amount instruction value Duty_set2 that is set by the pin disengagement control section 143.

During the pin disengagement control in which the operation amount OCV_duty is set to the second operation amount instruction value Duty_set2, the feedback control section 130 fixes at least the integral term in the PID calculation to zero, and continues the feedback calculation. Thus, even in the case where the target rotational phase θvvt_tgt of the camshaft 11 keeps separating from the actual relative rotational phase θvvt_act thereof in the period until the pin disengagement control is completed, the first operation amount instruction value Duty_set1 does not keep being increased. As a result, it is possible to suppress the abrupt increase in the operation amount OCV_duty at the time when the operation amount OCV_duty of the hydraulic control valve 23 is switched from the second operation amount instruction value Duty_set2 to the first operation amount instruction value Duty_set1 upon the completion of the pin disengagement control, and thus to suppress the hunting of the camshaft 11.

The feedback control section 130 may fix the proportional term and the derivative term to zero in addition to the integral term during the pin disengagement control, and may continue the feedback calculation. As a result, it is possible to minimize the increase width of the operation amount OCV_duty of the hydraulic control valve 23 at the time when the pin disengagement control is completed and the operation amount OCV_duty is switched from the second operation amount instruction value Duty_set2 to the first operation amount instruction value Duty_set1. Thus, it is possible to further suppress the hunting of the camshaft 11.

The preferred embodiment of the present invention has been described in detail so far with reference to the accompanying drawings. However, the present invention is not limited to such an embodiment. It is obvious that a person who has basic knowledge in the technical field to which the present invention pertains could have easily arrived at various modification examples and application examples that fall within the scope of the technical idea described in the claims. It is understood that those naturally fall within the technical scope of the present invention.

For example, the feedback control section 130 in the valve timing control device 100 according to the embodiment fixes at least the integral term in the PID calculation to zero in the entire period from the time t0 to the time t1, in which the pin disengagement control is executed. However, the present invention is not limited to such an example. For example, the feedback control section 130 may fix at least the integral term to zero in the case where the first operation amount instruction value Duty_set1 that is calculated during the pin disengagement control exceeds a specified threshold value. In this way, in the case where the lock pin 43 is disengaged in an extremely short time, the basic feedback calculation continues without the generation of the hunting of the camshaft 11. Only in the case where it takes time for the disengagement of the lock pin 43, an effect of suppressing the increase width of the operation amount OCV_duty can be obtained.

In addition, the feedback control section 130 in the valve timing control device 100 according to the embodiment fixes at least the integral term in the PID calculation to zero such that the increase rate of the operation amount of the hydraulic control valve 23 is suppressed in comparison with that by the basic feedback calculation. However, the present invention is not limited to such an example. For example, the feedback control section 130 may continue the feedback calculation by correcting to reduce the target rotational phase θvvt_tgt of the camshaft 11 used for the PID calculation during the pin disengagement control. Alternatively, the feedback control section 130 may continue the feedback calculation by correcting to reduce the difference Δvvt in the relative rotational phase of the camshaft 11 used for the PID calculation during the pin disengagement control.

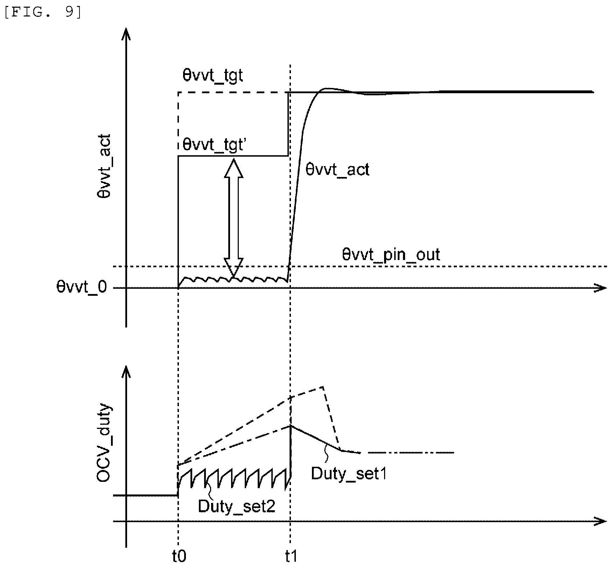

Fig. 9 includes graphs for illustrating the change in the relative rotational phase θvvt_act of the camshaft 11 according to a modified example, and, similar to Fig. 8, illustrates the change in the actual relative rotational phase θvvt_act of the camshaft 11 at the time when the valve timing is advanced from the relative rotational phase θvvt_0 in which the valve timing is retarded the most. In the modified example, during the pin disengagement control, the feedback control section 130 continues the PID calculation by the above formula (1) by correcting the target rotational phase θvvt_tgt of the camshaft 11 to a small value θvvt_tgt'. As a result, the separation between the target rotational phase θvvt_tgt and the actual relative rotational phase θvvt_act of the camshaft 11 becomes small. Thus, the increase width in the first operation amount instruction value Duty_set1 is reduced.

As a result, it is possible to suppress the increase width of the operation amount OCV_duty of the hydraulic control valve 23 at the time when the pin disengagement control is completed and the operation amount OCV_duty is switched from the second operation amount instruction value Duty_set2 to the first operation amount instruction value Duty_set1. The increase width of the operation amount OCV_duty in this embodiment at the time t1 that is indicated by a solid line in Fig. 9 is smaller than the increase width of the operation amount OCV_duty in the reference example at the time t1 that is indicated by a broken line. Thus, the relative rotational phase θvvt_act of the camshaft 11 is converged to the target rotational phase θvvt_tgt without generating the hunting of the camshaft 11. Just as described, the increase width of the calculated first operation amount instruction value Duty_set1 is suppressed by reducing the target rotational phase θvvt_tgt or the difference Δvvt. Therefore, it is possible to suppress the hunting of the camshaft 11.

## Claims

1. A valve timing control device (100) that controls a valve timing adjuster (1) so as to adjust opening/closing timing of a valve, the valve timing adjuster (1) including: a valve timing adjustment mechanism (30) that changes a rotational phase of a camshaft (11) relative to a rotational phase of a crankshaft (13) in an internal combustion engine (10); and a lock mechanism (40) that keeps the crankshaft (13) and the camshaft (11) in a specified relative rotational phase when a lock pin (43) is engaged with an engaging section (47), the valve timing control device (100) comprising:

   a target phase setting section (110) that sets a target rotational phase of the camshaft (11) with respect to the rotational phase of the crankshaft (13);
   a feedback control section (130) that sets a first operation amount instruction value by a feedback calculation including: proportional operation for changing an operation mount of a hydraulic control valve (23) that supplies a hydraulic pressure to the valve timing adjuster (1) in proportion to a difference between the actual relative rotational phase and the target rotational phase of the camshaft (11); and integral operation for changing the operation amount of the hydraulic control valve (23) in proportion to a time integral of the difference;
   a pin disengagement control section (143) that executes pin disengagement control for setting a second operation amount instruction value of the hydraulic control valve (23) such that the hydraulic pressure supplied to the valve timing adjuster (1) fluctuates, and causes the lock pin (43) to gradually move in a period until a locked state of the valve timing adjustment mechanism (30) is canceled; and
   an operation amount setting section (150) that sets the operation amount of the hydraulic control valve (23) to the second operation amount instruction value in the period until the locked state of the valve timing adjustment mechanism (30) is canceled, and sets the operation amount of the hydraulic control valve (23) to the first operation amount instruction value in a period other than the above period, wherein
   during the pin disengagement control, the feedback control section (130) continues the feedback calculation such that an increase rate of the operation amount of the hydraulic control valve (23) is suppressed in comparison with the basic feedback calculation.

2. The valve timing control device (100) according to claim 1, wherein

when the rotational phase of the camshaft (11) relative to the rotational phase of the crankshaft (13) reaches a pin disengagement completion determination threshold value used to determine cancellation of the locked state,

the operation amount setting section (150) switches the operation amount of the hydraulic control valve (23) from the second operation amount instruction value to the first operation amount instruction value, and

the feedback control section (130) cancels setting for performing the feedback calculation so as to suppress the increase rate of the operation amount of the hydraulic control valve (23) by the integral operation.

3. The valve timing control device (100) according to claim 1 or 2, wherein
during the pin disengagement control, the feedback control section (130) fixes the operation amount of the hydraulic control valve (23) by the integral operation to zero, and continues the feedback calculation.

4. The valve timing control device (100) according to claim 3, wherein
during the pin disengagement control, the feedback control section (130) fixes the operation amount of the hydraulic control valve (23) by the integral operation to zero in the case where the operation amount of the hydraulic control valve (23) by the integral operation exceeds a specified threshold value.

5. The valve timing control device (100) according to claim 3 or 4, wherein
during the pin disengagement control, the feedback control section (130) fixes the operation amount of the hydraulic control valve (23) by the integral operation and all the other operation amounts of the hydraulic control valve (23) to zero, and continues the feedback calculation.

6. The valve timing control device (100) according to claim 1 or 2, wherein
during the pin disengagement control, the feedback control section (130) corrects to reduce the target rotational phase or the difference, and continues the feedback calculation.

7. A valve timing control method for controlling a valve timing adjuster (1) so as to adjust opening/closing timing of a valve, the valve timing adjuster (1) including: a valve timing adjustment mechanism (30) that changes a rotational phase of a camshaft (11) relative to a rotational phase of a crankshaft (13) in an internal combustion engine (10); and a lock mechanism (40) that keeps the crankshaft (13) and the camshaft (11) in a specified relative rotational phase when a lock pin (43) is engaged with an engaging section (47), the valve timing control method comprising:

a step (S13) of setting a target rotational phase of the camshaft (11) with respect to the rotational phase of the crankshaft (13) by a target phase setting section (110);

a step (S19, S25) of setting a first operation amount instruction value by a feedback control section (130) performing a feedback calculation including: proportional operation for changing an operation mount of a hydraulic control valve (23) that supplies a hydraulic pressure to the valve timing adjuster (1) in proportion to a difference between the actual relative rotational phase and the target rotational phase of the camshaft (11); and integral operation for changing the operation amount of the hydraulic control valve (23) in proportion to a time integral of the difference;

a step (S17) of executing pin disengagement control by a pin disengagement control section (143), the pin disengagement control setting a second operation amount instruction value of the hydraulic control valve (23) such that the hydraulic pressure supplied to the valve timing adjuster (1) fluctuates, and causing the lock pin (43) to gradually move in a period until a locked state of the valve timing adjustment mechanism (30) is canceled; and

a step (S17, S25) of setting the operation amount of the hydraulic control valve (23) to the second operation amount instruction value in the period until the locked state of the valve timing adjustment mechanism (30) is canceled, and setting the operation amount of the hydraulic control valve (23) to the first operation amount instruction value in a period other than the above period by an operation amount setting section (150), wherein during the pin disengagement control, the feedback control section (130) continues the feedback calculation such that an increase rate of the operation amount of the hydraulic control valve (23) is suppressed.

[FIG. 1]

[FIG. 2]

[FIG. 3]

33  43  41  45  35,36

36a

49  47

[FIG. 4]

33  43  41  45  35,36

36a

49  47

[FIG. 5]

θvvt_tgt SETTING —110

θ DETECTION —120  θvvt_act

+ − Δvvt

FB CONTROL (PID CALCULATION) —130  Duty_set1

OPERATION AMOUNT SETTING —150  OCV_duty

OCV DRIVE CIRCUIT —160

PIN CONTROL —140

MOST RETARDED PHASE KEEPING CONTROL —141

PIN DISENGAGEMENT CONTROL —143

Duty_set2

100

[FIG. 6]

[FIG. 7]

START

MOST RETARDED PHASE KEEPING CONTROL
(SET SECOND OPERATION AMOUNT INSTRUCTION VALUE) — S11

CALCULATE TARGET PHASE — S13

START DISENGAGING PIN? — S15
No
Yes

INITIATE PIN DISENGAGEMENT CONTROL
(SET SECOND OPERATION AMOUNT INSTRUCTION VALUE) — S17

FEEDBACK CALCULATION WITH INTEGRAL ADDED VALUE OF I TERM = 0 — S19

PIN DISENGAGEMENT COMPLETED? — S21
No
Yes

TERMINATE PIN DISENGAGEMENT CONTROL — S23

BASIC FEEDBACK CONTROL
(FIRST OPERATION AMOUNT INSTRUCTION VALUE SETTING) — S25

END

[FIG. 8]

[FIG. 9]

## INTERNATIONAL SEARCH REPORT

| International application No. |
| --- |
| PCT/JP2018/032038 |

| | |
| --- | --- |
| A. CLASSIFICATION OF SUBJECT MATTER | |
| Int.Cl. F02D13/02(2006.01)i, F01L1/356(2006.01)i | |

According to International Patent Classification (IPC) or to both national classification and IPC

| | |
| --- | --- |
| B. FIELDS SEARCHED | |

Minimum documentation searched (classification system followed by classification symbols)
Int.Cl. F02D13/02, F01L1/356

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2009-133263 A (TOYOTA MOTOR CORPORATION) 18 June 2009, abstract, claim 1, paragraphs [0031]-[0090], fig. 1-6 (Family: none) | 1-7 |
| Y | JP 2005-146922 A (TOYOTA MOTOR CORPORATION) 09 June 2005, paragraphs [0033]-[0142], fig. 1-9 & US 2005/0098130 A1, paragraphs [0024]-[0141], fig. 1-9 & EP 1531248 A1 & KR 10-2005-0045919 A & CN 1616807 A | 1-7 |
| Y | JP 2005-146923 A (TOYOTA MOTOR CORPORATION) 09 June 2005, paragraphs [0021]-[0112], fig. 1-9 & US 2005/0098131 A1, paragraphs [0020]-[0117], fig. 1-9 & EP 1531251 A2 & KR 10-2005-0045920 A & CN 1624308 A | 1-7 |

| | |
| --- | --- |
| ☒ Further documents are listed in the continuation of Box C. | ☐ See patent family annex. |

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07.11.2018 | 20.11.2018 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/032038

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | WO 2013/129110 A1 (NISSAN MOTOR CO., LTD.) 06 September 2013, paragraphs [0014]-[0077], fig. 1-7 & US 2014/0366825 A1, paragraphs [0020]-[0083], fig. 1-7 & EP 2821623 A1 & CN 104136745 A | 1-7 |
| Y | JP 2011-58444 A (DENSO CORPORATION) 24 March 2011, abstract, paragraphs [0013]-[0056], fig. 1-11 & US 2011/0061619 A1, abstract, paragraphs [0022]-[0071], fig. 1-11 | 1-7 |

Form PCT/ISA/210 (continuation of second sheet) (January 2015)

**EP 3 693 584 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009133263 A